# EUROPÄISCHE PATENTSCHRIFT

(11) **EP 1 893 709 B1**
(45) Veröffentlichungstag und Bekanntmachung des Hinweises auf die Patenterteilung: **10.10.2012**
(21) Anmeldenummer: 06761934.6
(22) Anmeldetag: 24.05.2006
(51) Int. Cl.: C09J 7/00, C09J 7/02, C08L 9/02, C09J 109/02, B29K 105/00, B29K 305/02, B29K 305/12

(54) **KLEBSTOFFFOLIE AUF BASIS VON NITRILKAUTSCHUK-BLENDS ZUR FIXIERUNG VON METALLTEILEN AUF KUNSTSTOFFEN**
ADHESIVE SHEET BASED ON NITRILE RUBBER BLENDS FOR AFFIXING METAL COMPONENTS TO PLASTICS
FEUILLE ADHESIVE A BASE DE MELANGES DE CAOUTCHOUC NITRILE POUR FIXER DES PIECES METALLIQUES SUR DES MATIERES PLASTIQUES

(30) Priorität: 30.05.2005 DE 102005025056
(43) Veröffentlichungstag der Anmeldung: 05.03.2008
(73) Patentinhaber: TESA SE, 20253 Hamburg (DE)
(72) Erfinder: HUSEMANN, Marc, 22559 Hamburg (DE); HANNEMANN, Frank, 22047 Hamburg (DE); KOOP, Matthias, 22848 Norderstedt (DE)
(86) Internationale Anmeldenummer: PCT/EP2006/004973
(87) Internationale Veröffentlichungsnummer: WO 2006/128629

(56) Entgegenhaltungen:
- WO-A-2004/094550
- WO-A-2005/063909
- WO-A2-01/94493
- US-A- 4 725 637
- US-A- 5 277 972
- RUDOF RIESEN ET AL: "Die Glasübergangtemperatur gemessen mit verschiedenen TA-Techniken, Teil 2: Ermittlung der Glasübergangstemperaturen", INTERNET CITATION, 1 February 2003 (2003-02-01), pages 1-20, XP002594785, Retrieved from the Internet: URL:http://de.mt.com/global/de/home/suppor tive_content/usercom/TA_UserCom 18.z2vUzxjPy0vKAxrVCMLHBfbHCI45nZa0nG--.Me diaFileComponent.html/tause rc18d.pdf [retrieved on 2010-08-02]

## Beschreibung

Die Erfindung betrifft einen Blend aus zumindest zwei Nitrilkautschuken unterschiedlicher Zusammensetzung und zumindest einem Reaktivharz zur Verklebung von Metallteilen auf Kunststoffen in portablen Consurnerelektronik-Artikeln, wobei diese nach der Verklebung auch bei tiefen Temperaturen unterhalb von - 15 °C eine hohe Verklebungsfestigkeit und Schockresistenz aufweisen.

Zur Verklebung von Metallteilen auf Kunststoffen werden üblicher Weise doppelseitige Haftklebebänder eingesetzt. Die hierfür erforderlichen Klebkräfte genügen einer Fixierung und Befestigung der Metallbauteile auf den Kunststoffen. Als Metalle werden bevorzugt Stahl, Edelstahl sowie Aluminium eingesetzt. Als Kunststoffe werden z.B. PVC, ABS, PC oder Blends basierend auf diesen Kunststoffen eingesetzt. Für portable Konsumgüterelektronikartikel steigen jedoch stetig die Anforderungen. Zum einen werden diese Artikel immer kleiner, so dass damit auch die Verklebungsflächen geringer werden. Zum anderen muss die Verklebung zusätzliche Anforderungen erfüllen, da portable Artikel in einem größeren Temperaturbereich eingesetzt werden und zudem mechanischer Belastung (Stöße, Stürze usw.) ausgesetzt werden können. Diese Vorraussetzungen sind besonders problematisch für Metallverklebungen auf Kunststoffen. Der Kunststoff kann bei einem Sturz einen Teil der Energie absorbieren, während Metalle sich gar nicht verformen. In diesem Fall muss das Klebeband einen Großteil der Energie absorbieren. Dies kann in besonders effizienter Weise durch den Einsatz hitzeaktivierbarer Folien geschehen, die eine besonders hohe Klebkraft nach Aktivierung ausbilden können.

Hitze-aktivierbare Klebemassen können in zwei Kategorien unterschieden werden:
a) thermoplastische hitzeaktivierbare Folien
b) reaktive hitzeaktivierbare Folien

Thermoplastische hitzeaktivierbare Folien sind bereits seit langem bekannt und basieren z.B. auf Polyestern oder Copolyamiden. Kommerzielle Beispiele hierfür sind von den Firmen 3M (Produkte 615, 615S) oder tesa (Produkt 8440) erhältlich. Für die Anwendung in portablen Konsumgüterelektronikartikeln weisen diese thermoplastischen hitzeaktivierbaren Folien aber auch Nachteile auf. Dies betrifft insbesondere das "Oozing-Verhalten" unter Anwendung von Druck unter Temperatur, da in der Anwendung hauptsächlich Stanzlinge verarbeitet werden, die dann ihre Form verändern.

Weiterhin lassen sich auch reaktive hitzeaktivierbare Folien einsetzen. Diese besitzen eine bedeutend bessere Dimensionsstabilität, wenn die elastomere Komponente eine hohe Elastizität aufweist. Weiterhin bedingen die Reaktivharze, dass eine Vernetzungsreaktion eintreten kann, die die Verklebungsfestigkeit deutlich erhöht. So lassen sich für diese Verklebung z.B. hitzeaktivierbare Folien auf Basis von Nitrilkautschuken und Phenolharzen einsetzen, wie z.B. kommerziell erhältlich durch das Produkt 8401 der Firma tesa. Ein Nachteil dieser reaktiven hitzeaktivierbaren Folien ist aber die Abhängigkeit der Verklebungsfestigkeit von den Aushärtungsbedingungen. Hier werden besonders hohe Anforderungen gestellt, da Konsumgüterelektronikgeräte in riesigen Stückzahlen hergestellt werden und somit die einzelnen Bauteile in sehr kurzen Taktzeiten produziert werden.

Der Nitrilkautschuk gibt der hitzeaktivierbaren Folie durch seine hohe Fließviskosität eine hohe Dimensionsstabilität und ermöglicht durch die Vernetzungsreaktion hohe Klebkräfte auf Metallen und Kunststoffen. Die hohe Dimensionsstabillät und das geringe Fließvermögen besitzen aber auch Nachteile: Durch die hohe Festigkeit verhärtet sich die hitzeaktivierbare Folie bei tiefen Temperaturen sehr schnell und wird spröde, mit dem Resultat, dass die Verklebung bei sehr tiefen Temperaturen schockempfindlich wird und aufspringt.

Die WO 01/94493 zeigt eine thermisch aushärtbare Haftklebemasse auf Basis eines Blends aus zwei Nitrilkautschuken und einem Epoxyharz als Reaktivharz insbesondere zur Verklebung auf öligen und/oder kalten Untergründen. Es werden Nitrilkautschuke mit niedrigen Glasübergangstemperaturen eingesetzt, die beide in einem ähnlichen Temperaturbereich liegen. Die Blends liegen nicht (mikro-)phasensepariert vor, und eine solche Phasentrennung wird nicht nahegelegt.

Bisher ist es noch nicht gelungen, eine hitzeaktivierbare Folie in der Form herzustellen, dass die Verklebungsfestigkeit sowohl bei hohen als auch bei geringen Temperaturen sehr hoch ist und somit ein weiter Temperaturbereich abgedeckt werden kann.

Der Erfindung liegt in Anbetracht dieses Standes der Technik die Aufgabe zu Grunde, eine hitzeaktivierbare Klebstofffolie zum Befestigen von Metallteilen auf Kunststoffen für portable Konsumgüterelektronikartikel zur Verfügung zu stellen, welche in einem breiten Temperaturbereich einsatzbereit ist.

Vorteilhaft sollte die Folie bei - 20 °C einem Kälteschocktest standhalten und eine hohe Bindungsstärke in einem Temperaturbereich von - 20 °C bis + 50 °C aufweisen.

Erfindungsgemäß wird die Aufgabe gelöst durch eine Klebstofffolie, aufweisend zumindest eine hitzeaktivierbare Klebmasse auf Basis eines Blends aus zumindest einem Nitrilkautschuk S1 und zumindest einem Nitrilkautschuk S2, wobei der zumindest eine Nitrilkautschuk S1 einen Acrylnitrilanteil von nicht mehr als 25 Gew.-% und der zumindest eine Nitrilkautschuk S2 einen Acrylnitrilanteil von nicht weniger als 30 Gew.-% aufweist, und zumindest einem Epoxyharz, Novolakharz, Melaminharz, Terpenphenolharz, Phenolharz oder Polyisocyanat ("Reaktivharz") oder einer Kombination zweier oder mehrerer der genannten Harze,
wobei das Gewichtsverhältnis des Nitrilkautschuk S1 zum Nitrilkautschuk S2 zwischen 20 zu 80 und 80 zu 20 liegt und der Blend mikrophasensepariert vorliegt, gekennzeichnet durch mindestens zwei unterschiedliche Glasübergangstemperaturen im DSC.

Das Reaktivharz, ist zur Vernetzung mit sich selbst, mit anderen Reaktivharzen und/oder mit den Nitrilkautschuken S1 und S2 befähigt.

Bei dem erfindungsgemäßen Blend aus zwei synthetischen Nitrilkautschuken S1 und S2 und zumindest einem Reaktivharz handelt es sich um einen solchen, der mikrophasensepariert vorliegt und bevorzugt mehrere, sehr bevorzugt alle der folgenden Eigenschaften aufweist:
a) mindestens eine Glasübergangstemperatur ist größer als 10 °C und mindestens eine Glasübergangstemperatur kleiner als - 20 °C,
b) eine nach Testmethode A gemessene Fallhöhe von größer 1m bei Raumtemperatur (RT) und von größer 25 cm bei einer Temperatur von - 20 °C,
c) eine nach Testmethode B Verklebungsfestigkeit von größer 3 N/mm² bei Raumtemperatur (RT) und von größer 6 N/mm² bei einer Temperatur von - 20 °C.

Aufgrund der erfindungsgemäßen Mischung des Blends wird eine Verbesserung der klebtechnischen Eigenschaften der Klebstofffolie erreicht, und zwar insbesondere durch die Mikrophasenseparierung und durch die Ausbildung von zwei Glasübergangstemperaturen bei sehr tiefen Temperaturen (kleiner - 20°C) und bei hohen Temperaturen (>10°C) (Kombination der klebtechnischen Eigenschaften bei tiefen und bei hohen Temperaturen).

Durch chemische Kopplung von thermodynamisch unverträglichen Polymerblöcken weisen entsprechende Blockcopolymere eine Mikrophasenseparierung auf, d. h. thermodynamisch verträgliche Polymerblöcke assoziieren, während thermodynamisch unverträgliche in räumlich separate Bereiche segregieren, ohne dass jedoch eine makroskopische Phasentrennung auftritt. Es resultieren je nach Zusammensetzung Phasen unterschiedlicher Struktur ("Domänenbildung"). Für die Erfindung ist es nicht erforderlich, dass die entsprechend zu beobachtende oder zu vermessende Mikrophasenseparation "ideale" Strukturen ergibt.

Typische Verfahren zur Ermittlung einer vorliegenden Mikrophasenseparation beinhalten beispielsweise
• die Transmissionselektronenmikroskopie (TEM) bei Materialien, die unterschiedliche Wechselwirkung mit Staining-Agentien aufweisen;
• die Atomkraftmikroskopie (AFM) über die Oberflächentopologie, einen Härte- oder Adhäsionskontrast;
• Streumethoden (Neutronenstreuung, Röntgenkleinwinkelstreuung) bei Materialien mit Phasen, die einen Unterschied im Material/Strahlungs-Wirkungsquerschnitt zeigen;
• kalorimetrische Verfahren, wie die Differentialthermocalorimetrie (DSC) oder die Differentialthermoanalyse (DTA) und auch rheologische Messungen für Materialien mit Phasen unterschiedlicher Erweichungspunkte;
• NMR Spindiffusion für Materialien mit Phasen unterschiedlicher Dynamik.

Durch die Domäne mit der geringen Glasübergangstemperatur wird die Kältschlagfestigkeit und die Adhäsion bei geringen Temperaturen erhöht, durch die Domäne bei hohen Temperaturen wird die Verklebungsfestigkeit bei hohen Temperaturen und die Dimensionsstabilität der Stanzlinge unter Druck und unter Temperatur erhalten.

Die hier angegebenen Glasübergangstemperaturen entsprechen solchen, die aus quasistationären Experimenten, wie z.B. DSC (Differential oder Dynamic Scanning Calorimetrie), erhalten werden.

Der Gewichtsanteil der Nitrilkautschuke S1 und S2 in Summe beträgt bevorzugt zwischen 25 und 70 Gew.-%, besonders bevorzugt zwischen 30 und 60 Gew.-% an der Gesamtzusammensetzung der reaktiven hitzaktivierbaren Folie.

Für die Verklebung der Metallteile auf den Kunststoffen werden je nach Oberflächenrauhigkeit, Wölbung oder Größe hitzeaktivierbare Folien mit einer Schichtdicke zwischen 25 und 300 µm, in einer besonders bevorzugten Auslegung mit einer Schichtdicke von 50 bis 250 µm eingesetzt.

Der erfindungsgemäβe hitzeaktivierbare Kleber basiert auf einem Blend von zumindest zwei Nitrilkautschuken (= Nitrilbutadienkautschuken) S1 und S2.

Nitrilbutadienkautschuke sind unter Europrene™ von Eni Chem, oder unter Krynac™ und Perbunan™ von Bayer, oder unter Breon™ und Nipol N™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert.

Die Nitrilkautschuke S1 weisen einen Acrylnitrilanteil von kleiner 25 Gew.-% auf. Um eine vollstänige Phasenseparierung zu vermeiden, sollte der Acrylnitrilanteil aber vorteilhaft bei größer 15 Gew.%, bezogen auf die Gesamtmenge an S1, liegen. Ein weiteres Kriterium stellt die Glasübergangstemperatur der Nitrilkautschuke S1 dar. Um eine Mikrophasenseparierung zu erreichen, sollte bevorzugt die statische Glasübergangstemperatur im DSC bei kleiner - 30 °C, mehr bevorzugt bei kleiner - 35 °C liegen. Ein weiteres Kriterium für den Nitrilkautschuk S1 ist die Mooney-Viskosität. Da eine hohe Flexibilität bei tiefen Temperaturen gewährleistet werden muss, sollte die Mooney-Viskosität unterhalb 100 liegen (Mooney ML 1+4 bei 100 °C). Kommerzielle Beispiele für solche Nitrilkautschuke sind z.B. Nipol™ N917 der Firma Zeon Chemicals.

Die Nitrilkautschuke S2 weisen einen Acrylnitrilanteil von größer 30 Gew.-% auf. Um eine vollständige Phasenseparierung zu vermeiden, sollte der Acrylnitrilanteil aber bevorzugt bei kleiner 60 Gew.-%, bezogen auf den Gesamtmenge an S2, liegen. Um eine Mikraphasenseparierung zu erreichen, sollte bevorzugt die statische Glasübergangstemperatur im DSC bei größer/gleich - 20 °C, mehr bevorzugt bei größer - 15 °C liegen. Da eine hohe Flexibilität bei tiefen Temperaturen gewährleistet werden muss, sollte die Mooney-Viskosität von S2 ebenfalls unterhalb 100 liegen (Mooney ML 1+4 bei 100 °C). Kommerzielle Beispiel für solche Nitrilkautschuke sind z.B. Nipol™ 1002 der Firma Zeon Chemicals.

Erfindungsgemäß werden die Nitrilkautschuke derart eingesetzt, dass das Gewichtsverhältnis zwischen 20 % Nitrilkautschuk S1 zu 80 % Nitrilkautschuk S2 und 80 % Nitrilkautschuk S1 zu 20 % Nitrilkautschuk S2 liegt. Bevorzugt liegt das Gewichtsverhältnis

Gewichtsverhältnis des Nitrilkautschuks S1 zum Nitrilkautschuk S2 zwischen 40 zu 60 und 60 zu 40. Als besonders vorteilhaft hat es sich herausgestellt, ein ausgeglichenes Gewichtsverhältnis, also im Wesentlichen 50 zu 50, zu wählen.

Der Anteil der Reaktivharze im Blend beträgt bevorzugt zwischen 75 und 30 Gew.-%.

Eine im Sinne der Reaktivharze einzusetzende Gruppe umfasst Epoxy-Harze. Das gewichtsmittlere Molekulargewicht der Epoxy-Harze variiert bevorzugt von M_{w} = 100 g/mol bis zu maximal M_{w} = 10000 g/mol für polymere Epoxy-Harze.

Die Epoxy-Harze umfassen zum Beispiel das Reaktionsprodukt aus Bisphenol A und Epichlorhydrin, Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Vorteilhaft lassen sich auch aliphatische Epoxy-Harze einsetzen, kommerziell erhältliche gut geeignete Beispiele sind Vinylcyclohexandioxide, wie ERL-4206, ERL-4221, ERL 4201, ERL-4289 oder ERL-0400 von Union Carbide Corp.

Ebenfalls vorteilhaft einsetzen lassen sich Novolak-Harze, so können z.B. eingesetzt werden Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNippon Ink Chemistry oder Epikote™ 152 von Shell Chemical.

Weiterhin lassen sich als Reaktivharze auch Melamin-Harze einsetzen, wie z.B. Cymel™ 327 und 323 von Cytec.

Weiterhin lassen sich als Reaktivharze auch Terpenphenolharze, wie z.B. NIREZ™ 2019 von Arizona Chemical einsetzen.

Weiterhin lassen sich als Reaktivharze auch Phenolharze, wie z.B. YP 50 von Toto Kasei, PKHC von Union Carbide Corp. und BKR 2620 von Showa Union Gosei Corp. einsetzen. Weiterhin lassen sich als Reaktivharze auch Phenolresolharze auch in Kombination mit anderen Phenolharzen einsetzen.

Weiterhin lassen sich als Reaktivharze auch Polyisocyanate, wie z.B. Coronate™ L von Nippon Polyurethane Ind., Desmodur™ N3300 oder Mondur™ 489 von Bayer einsetzen.

Es können auch Kombination zweier oder mehrer der genannten Reaktivharze eingesetzt werden

In einer vorteilhaften Ausführung der erfindungsgemäßen Klebstofffolie sind dem Blend außerdem klebkraftsteigernde (klebrigmachende) Harze zugesetzt; sehr vorteilhaft zu einem Anteil von bis zu 30 Gew.-%, bezogen auf den Blend. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit den Kautschuken S1 und/oder S2 kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Um die Reaktion zwischen den beiden Komponenten zu beschleunigen, lassen sich auch optional Vernetzer und Beschleuniger in die Mischung zu additivieren.

Als Beschleuniger eignen sich z.B. Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze. Weiterhin lassen sich auch Amine, insbesondere tert.-Amine zur Beschleunigung einsetzen.

Als Additive lassen sich auch Weichmacher vorteilhaft einsetzen. Hier können in einer bevorzugten Ausführung der Erfindung Weichmacher auf Basis Polyglykolethern, Polyethylenoxiden, Phosphatestern, aliphatische Carbonsäureester und Benzoesäureester eingesetzt werden. Weiterhin lassen sich auch aromatische Carbonsäureester, höhermolekulare Diole, Sulfonamide und Adipinsäureester einsetzen.

Weiterhin können optional Füllstoffe (z.B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und Thermoplaste, Compoundierungsmittel und/oder Alterungsschutzmittel, z.B. in Form von primären und sekundären Antioxidantien oder in Form von Lichtschutzmitteln zugesetzt sein.

In einer weiteren bevorzugten Ausführungsform werden dem Blend weitere Additive hinzugesetzt, wie z.B. Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke, Styrol-Butadien Kautschuke.

Polyvinylbutyrale sind unter Butvar™ von Solutia, unter Pioloform™ von Wacker und unter Mowital™ von Kuraray erhältlich. Polyacrylat Kautschuke sind unter Nipol AR™ von Zeon erhältlich. Chloropren Kautschuke sind unter Baypren™ von Bayer erhältlich. Ethylen-Propylen-Dien Kautschuke sind unter Keltan™ von DSM, unter Vistalon™ von Exxon Mobil und unter Buna EP™ von Bayer erhältlich. Methyl-Vinyl-Silikon Kautschuke sind unter Silastic™ von Dow Corning und unter Silopren™ von GE Silicones erhältlich. Fluorsilikon Kautschuke sind unter Silastic™ von GE Silicones erhältlich. Butyl Kautschuke sind unter Esso Butyl™ von Exxon Mobil erhältlich. Styrol-Butadien Kautschuke sind unter Buna S™ von Bayer, und Europrene™ von Eni Chem und unter Polysar S™ von Bayer erhältlich.

Polyvinylformale sind unter Formvar™ von Ladd Research erhältlich.

In einer weiteren bevorzugten Ausführungsform werden dem Blend weitere Additive hinzugesetzt, wie z.B. thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie z. B. Polytetrafluorethylen, Polyamide, Ethylenvinylacetate, Polyvinylacetate, Polyimide, Polyether, Copolyamide, Copolyester, Polyolefine, wie z.B. Polyethylen, Polypropylen, Polybuten, Polyisobuten, und Poly(meth)acrylate.

Die Klebkraft der Hitzaktivierbaren Folie kann durch weitere gezielte Additivierung gesteigert werden. So lassen sich z.B. Polyimin- oder Polyvinylacetat-Copolymere auch als klebkraftfördernde Zusätze verwenden.

### Verfahren zur Herstellung

Die erfindungsgemäßen Blends können aus Lösung oder in der Schmelze hergestellt werden. Für die Herstellung des Blends in Lösung werden bevorzugt Lösemittel eingesetzt, in denen mindestens einer der Komponenten eine gute Löslichkeit aufweist. Zur Herstellung der Mischung werden die bekannten Rühraggregate, wie z.B. Kneter, eingesetzt. Hierfür kann auch der Eintrag von Wärme erforderlich sein. Anschließend werden die Blends aus Lösung oder aus der Schmelze insbesondere auf einen temporären Träger beschichtet. Nach der Beschichtung aus Lösung wird in einem Trockenkanal das Lösungsmittel entfernt. Für die Beschichtung aus der Schmelze wird dem Blend zuvor das Lösungsmittel entzogen. In einer bevorzugten Ausführung wird das Lösemittel in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. Dann wird über eine Schmelzdüse oder eine Extrusionsdüse beschichtet, wobei gegebenenfalls der Klebefilm gereckt wird, um die optimale Beschichtungsdicke zu erreichen.

In einer weiteren Ausführung der Erfindung wird der Blend in der Schmelze hergestellt. Für die Vermischung der Harze kann bevorzugt ein Kneter, ein Doppelschneckenextruder oder ein Planetwalzenextruder eingesetzt werden.

Die Beschichtung erfolgt dann wiederum aus der Schmelze, wiederum bevorzugt auf einen temporären Träger. Es wird über eine Schmelzdüse oder eine Extrusionsdüse beschichtet, wobei gegebenenfalls der Klebefilm gereckt wird, um die optimale Beschichtungsdicke zu erreichen.

Als Trägermaterialien für den Blend werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. Die Trägermaterialien sollten mit einer Trennschicht ausgerüstet sein. Die Trennschicht besteht in einer sehr bevorzugten Auslegung der Erfindung aus einem Silikontrennlack oder einem fluorierten Trennlack. In einer bevorzugten Auslegung wird die hitzaktivierbare Klebemasse direkt auf ein Trennpapier beschichtet und dann weiter als Transfer-Tape eingesetzt. Zur Herstellung größerer Schichtdicken kann es auch von Vorteil sein, mehrere Klebemassenschichten zusammenzulaminieren. Dies findet besonders bevorzugt unter Einbringung von Wärme und Druck statt.

### Beispiele

### Testmethoden:

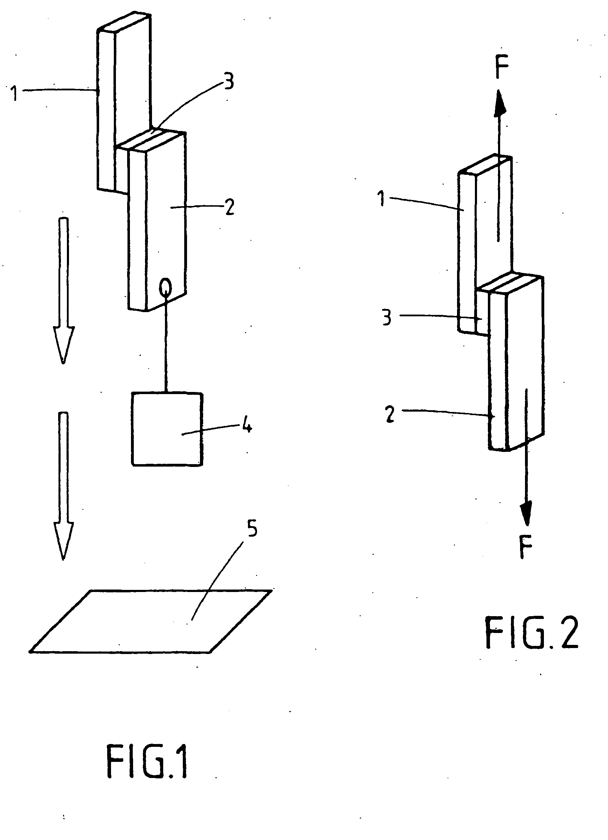

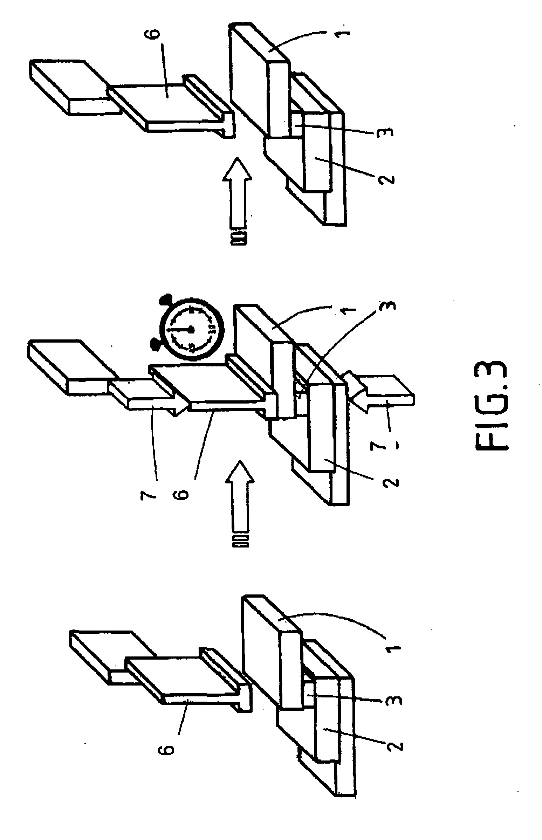

### Falltest A) (siehe hierzu Fig. 1 und 3)

Die Verklebungsfläche beträgt 2 cm². Es wird eine 1,5 mm dicke Aluminium-Platte (1) mit einer Breite von 2 cm mit einer Polycarbonat(PC)-Platte (2) mit einer Breite von 2 cm und einer Schichtdicke von 3 mm unter Verwendung einer erfindungsgemäßen hitzeaktivierbaren Klebstofffolie (3) verbunden.

In einem ersten Schritt wird eine 200 µm dicke hitzeaktivierbare Folie auf das Aluminium mit Hilfe einer 95 °C heißen Heizplatte laminiert. Anschließend wird die Trennfolie abgezogen. Die Verklebung der Prüfkörper wird in einer Heizpresse durchgeführt (vgl. Fig. 3; 1 = Aluminium-Platte, 2 = Polycarbonat-Platte, 3 = hitzeaktivierbare Klebstofffolie, 6 = Press-Stempel, 7 = Druck), wobei über die Al-Seite erhitzt wird. Die Hitzeaktivierung wird mit einem 180 °C heißen Heizpressstempel bei einem Druck von 5 bar und 5 s Verpressdauer durchgeführt.

Anschließend wird der Falltest durchgeführt (vgl. Fig. 1; 1 = Aluminium-Platte, 2 = Polycarbonat-Platte, 3 = hitzeaktivierbare Klebstofffolie, 4 = Gewicht, 5 = Stahlplatte; Pfeile in der Figur: Fallrichtung). An der PC-Platte **(2)** wird ein 50 g schweres Gewicht (4) befestigt. Dann wird der gesamte Verbund aus unterschiedlichen Höhen auf eine Stahlplatte (5) fallen gelassen. Es wird die Höhe bestimmt, bei der die Verklebung mit der hitzeaktivierbaren Folie noch den Stoß auffangen kann und die Al/PC Prüfkörper nicht auseinander fallen. Der Test wird weiterhin auch bei unterschiedlichen Temperaturen durchgeführt.

### Verklebungstestigkeit B) (siehe hierzu Fig. 2 und 3)

Die Verklebungsfestigkeit wird mit einem Dynamischen Schertest bestimmt (vgl. Fig. 2). Die Verklebungsfläche beträgt 2 cm². Es wird eine 1.5 mm dicke Al-Platte (1) mit einer Breite von 2 cm mit einer PC-Platte (2) mit einer Breite von 2 cm und einer Schichtdicke von 3 mm mittels einer erfindungsgemäßen hitzeaktivierbaren Klebstofffolie (3) verbunden.

In einem ersten Schritt wird eine 200 µm dicke hitzeaktivierbare Folie auf das Aluminium mit Hilfe einer 95 °C heißen Heizplatte laminiert. Anschließend wird die Trennfolie abgezogen. Die Verklebung der Prüfkörper wird in einer Heizpresse durchgeführt (vgl. Fig. 3; 1 = Aluminium-Platte, 2 = Polycarbonat-Platte, 3 = hitzeaktivierbare Klebstofffolie, 6 = Press-Stempel, 7 = Druck), wobei über die Al-Seite erhitzt wird. Die Hitzeaktivierung wird mit einem 180 °C heißen Heizpressstempel bei einem Druck von 5 bar und 5 s Verpressdauer durchgeführt.

Anschließend werden die Prüfmuster mit einer Zwickmaschine mit 10 mm/min unter Anwendung der langsam ansteigenden Kraft F auseinandergerissen. Die gemessene Einheit wird in N/mm² angegeben und ist die maximale Kraft, die gemessen wird, um die Prüfkörper (Aluminium und Polycarbonat) von einander zu trennen. Die Messung wird bei unterschiedlichen Temperaturen durchgeführt:
-20 °C, 0 % Luftfeuchtigkeit
23 °C, 50 % Luftfeuchtigkeit
50 °C, 50 % Luftfeuchtigkeit

Die Messungen werden sofort nach der Verpressung und Hitzeaktivierung durchgeführt, wobei ca 30 Minuten zur Akklimatisierung auf den jeweiligen Temperaturbereich gewartet wird.

### Handytest C)

Die Hitzeaktivierbare Folie wird mit einer Schichtdicke von 200 µm zur Verklebung eines Aluminiumdekorstückes auf einem PC Handygehäuse eingesetzt. Die Verklebungsfläche beträgt ca. 4 cm². Zur Verklebung wird eine Heizpresse mit 180°C, 5 bar und 5 sec. Härtungszeit eingesetzt. Nach 24 h werden die Handyschale nach der Verklebung auf - 20°C herabgekühlt. Die Probenkörper werden dann gegenseitig bei dieser Temperatur verdreht (getwistet).

### Molekulargewichtsbestimmung

Die Bestimmung der mittleren Molekulargewichte M_{w} (Gewichtsmittel) erfolgte durch Gelpermeationschromatorgraphie entsprechend der folgenden Parameter:
Eluent: THF/0,1Vol.-% Trifluoressigsäure
Vorsäule: PSS - SDV, 10 µ, ID 8,0 mm x 50 mm
Säule: PSS -SDV, 10 µ linear one, ID 8,0 mm x 300 mm
Pumpe TSP P 100
Fluß: 0,5 ml/min
Probenkonzentration: 1,5 g/l
Injektionssystem: TSP AS 3000 mit 100 µl Injektionsvolumen
Temperatur: 25 °C
Detektor: Shodex RI 71

Es wurde gegen Toluol als internen Standard gemessen. Eine Kalibration erfolgte mit Polystyrol-Standards im Trennbereich der Säule; unter Nutzung der bekannten Mark Houwink Koeffizenten a und K wurde die Polystyrol-Kalibrierung universell in eine PMMA-Kalibrierung umgerechnet.

Die Berechnung der Molmassenmittelwerte und deren Verteilung erfolgte mittels der Streifenmethode (WinGPC Version 6.20) rechnergestützt basierend auf der universellen (PMMA-) Kalibrierung.

Bei allen Angaben handelt es sich um "PMMA-Molmassen-Äquivalente".

### Referenzbeispiel 1)

50 Gew.-% Breon N36 C80 (Nitrilkautschuk) der Fa. Zeon, 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100°C für 10 Minuten getrocknet. Nach der Trocknung betrug die Schichtdicke 100 µm. Zwei dieser Lagen würden dann anschließend mit einem Rolllaminator bei 100 °C zusammenkaschiert. Anschließend betrug die Schichtdicke 200 µm.

### Referenzbeispiel 2)

50 Gew.-% Nipol N1094-80 (Nitrilkautschuk) der Fa. Zeon, 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 3)

25 Gew.-% Nipol N1094-80 (Nitrilkautschuk) der Fa. Zeon, 25 Gew.-% Breon N36 C80 (Nitrilkautschuk) der Fa. Zeon, 40 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitze-aktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Beispiel 4)

27,5 Gew.-% Nipol N1094-80 (Nitrilkautschuk) der Fa. Zeon, 27,5 Gew.-% Breon N36 C80 (Nitrilkautschuk) der Fa. Zeon, 45 Gew.-% Phenol-Novolak Harz Durez 33040 abgemischt mit 8 Gew.-% HMTA (Rohm und Haas) und 10 Gew.-% des Phenolresolharzes 9610 LW der Fa. Bakelite wurden als 30 %ige Lösung in Methylethylketon in einem Kneter hergestellt. Die Knetdauer betrug 20 h. Die Hitzeaktivierbare Klebemasse wurde anschließend aus Lösung auf ein Glassinetrennpapier ausgestrichen und bei 100 °C für 10 Minuten getrocknet. Nach der Trocknung betrug die Schichtdicke 100 µm. Zwei dieser Lagen wurden dann anschließend mit einem Rolllaminator bei 100 °C zusammenkaschiert. Anschließend betrug die Schichtdicke 200 µm.

### Ergebnisse:

Die erfindungsgemäßen hitzeaktivierbaren Klebstofffolien 3 und 4 wurden analog mit zwei Referenzbeispielen 1 und 2 ausgeprüft. Referenzbeispiel 1 stellt eine hitzeaktivierbare Folie dar, die auf einem Nitrilkautschuk mit hohem. Acrylnitrilanteil basiert (36 Gew.-%). Das Referenzbeispiel 2 basiert auf einem Nitrilkautschuk mit einem geringen Acrylnitrilanteil von 23 Gew.-%. Alle Beispiele wurden unter den identischen Härtungsbedingungen zur Verklebung von Aluminium auf PC eingesetzt - eine Anwendung, die z.B. bei der Herstellung von Handys häufig auftritt. Nach der Verklebung wurden die Muster einem Falltest unterzogen. Die Ergebnisse sind in Tabelle 1 dargestellt. Die jeweilige Fallhöhe wird in cm angegeben.

**Tabelle 1:**

| Beispiele | Testmethode A bei RT | Testmethode A bei -20°C |
|---|---|---|
| Referenz 1 | > 150 cm | 8 cm |
| Referenz 2 | > 150 cm | 15 cm |
| 3 | >150 cm | 50 cm |
| 4 | > 150 cm | 60 cm |

Tabelle 1 kann entnommen werden, dass die erfindungsgemäßen Beispiele 3 und 4 bei - 20 °C eine deutlich bessere Kälteschockempfindlichkeit aufweisen, was sich wiederum in der höheren Fallhöhe widerspiegelt. Bei Raumtemperatur sind dagegen die Unterschiede sehr gering und alle Beispiele weisen eine hohe Resistenz gegen Schock auf.

Des Weiteren wurden die Verklebungsfestigkeiten für die Beispiele bei unterschiedlichen Temperaturen gemessen. Wiederum wurden die Verklebungs/Härtungsbedingungen für alle Beispiele konstant gehalten. Die Ergebnisse sind in Tabelle 2 dargestellt.

**Tabelle 2**

| Beispiele | Testmethode B bei RT | Testmethode B bei +50°C | Testmethode B bei -20°C |
|---|---|---|---|
| Referenz 1 | 4,3 N/mm² | 1,5 N/mm² | 4,8 N/mm² |
| Referenz 2 | 3,9 N/mm² | 1,0 N/mm² | 5,5 N/mm² |
| 3 | 3,6 N/mm² | 1,0 N/mm² | 8,1 N/mm² |
| 4 | 3,8 N/mm² | 0,9 N/mm² | 9,2 N/mm² |

Tabelle 2 kann entnommen werden, dass insbesondere bei tiefen Temperaturen die Verklebungsfestigkeit für die erfindungsgemäßen Beispiele 3 und 4 am höchsten ist. Dies verdeutlicht, dass in Verbindung mit der hervorragenden Kälteschlagfestigkeit die erfindungsgemäßen Beispiele ein deutlich besseres Tieftemperaturverhalten aufweisen. Bei Raumtemperatur und + 50°C weist das Referenzbeispiel 1 die höchsten Werte auf, da dieses Beispiel nur auf einen Nitrilkautschuk mit hohen Acrylnitrilanteil basiert und somit das geringste Fließverhalten im dynamischen Schertest aufweist. Die Unterschiede sind aber zu den erfindungsgemäßen Beispielen 3 und 4 und zum Referenzbeispiel 2 relativ gering.

In einem letzten Versuch wurde eine praxisrelevante Verklebung einer Handyschale mit einem Aluminiumdekorstück durchgeführt. Bei einer Temperatur von - 20°C wurde dann die Handyschale verdreht. Bei den Referenzbeispielen 1 und 2 öffnete sich sehr leicht die Verklebung. Die erfindungsgemäßen Beispiele 3 und 4 konnten dagegen problemlos bei diesen tiefen Temperaturen verdreht werden und weisen somit in der Kälte ein deutlich besseres Klebeverhalten auf. Bei Raumtemperatur zeigten dagegen alle 4 Beispiele ein problemloses Verhalten und eine hohe Haftung.

## Patentansprüche

1. Klebstofffolie, aufweisend zumindest eine hitzeaktivierbare Klebmasse auf Basis eines Blends aus
zumindest einem Nitrilkautschuk S1 und zumindest einem Nitrilkautschuk S2, wobei der zumindest eine Nitrilkautschuk S1 einen Acrylnitrilanteil von nicht mehr als 25 Gew.-% und der zumindest eine Nitrilkautschuk S2 einen Acrylnitrilanteil von nicht weniger als 30 Gew.-% aufweist, sowie
zumindest einem Epoxyharz, Novolakharz, Melaminharz, Terpenphenolharz, Phenolharz oder Polyisocyanat ("Reaktivharz") oder einer Kombination zweier oder mehrerer der genannten Reaktivharze,
**dadurch gekennzeichnet, dass** das Gewichtsverhältnis des Nitrilkautschuk S1 zum Nitrilkautschuk S2 zwischen 20 zu 80 und 80 zu 20 liegt und der Blend mikrophasensepariert vorliegt, **gekennzeichnet durch** mindestens zwei unterschiedliche Glasübergangstemperaturen im DSC.

2. Klebstofffolie nach Anspruch 1, **dadurch gekennzeichnet, dass**
der Acrylnitrilanteil an dem zumindest einen Nitrilkautschuk S1 zwischen 15 und 25 Gew.-% liegt.

3. Klebstofffolie nach zumindest einem der vorangehenden Ansprüche, **dadurch gekennzeichnet, dass**
der Acrylnitrilanteil an dem zumindest einen Nitrilkautschuk S2 zwischen 30 und 60 Gew.-% liegt.

4. Klebstofffolie nach zumindest einem der vorangehenden Ansprüche, **dadurch gekennzeichnet, dass**
das Gewichtsverhältnis des Nitrilkautschuk S1 zum Nitrilkautschuk S2 zwischen 40 zu 60 und 60 zu 40 beträgt.

5. Klebstofffolie nach zumindest einem der vorangehenden Ansprüche, **dadurch gekennzeichnet, dass**
das zumindest eine Reaktivharz zu einem Anteil zwischen 30 und 75 Gew.-%, bezogen auf den Blend, vorliegt.

6. Klebstofffolie nach zumindest einem der vorangehenden Ansprüche, **dadurch gekennzeichnet, dass**
dem Blend klebkraftsteigernde Harze zugesetzt sind.

7. Verwendung einer Klebstofffolie nach einem der vorangehenden Ansprüche zur Verklebung von Metallteilen in Elektronikartikeln.

## Claims

1. Adhesive sheet comprising at least one heat-activatable adhesive based on a blend of
at least one nitrile rubber S1 and at least one nitrile rubber S2, said at least one nitrile rubber S1 having an acrylonitrile fraction of not more than 25% by weight and said at least one nitrile rubber S2 having an acrylonitrile fraction of not less than 30% by weight, and
at least one epoxy resin, novolak resin, melamine resin, terpene-phenolic resin, phenolic resin or polyisocyanate ("reactive resin") or a combination of two or more of said reactive resins,
**characterized in that** the weight ratio of nitrile rubber S1 to nitrile rubber S2 is between 20 to 80 and 80 to 20 and the blend is in microphase-separated form, **characterized by** at least two different glass transition temperatures in the DSC.

2. Adhesive sheet according to Claim 1, **characterized in that** the acrylonitrile fraction of said at least one nitrile rubber S1 is between 15% and 25% by weight.

3. Adhesive sheet according to at least one of the preceding claims, **characterized in that** the acrylonitrile fraction of said at least one nitrile rubber S2 is between 30% and 60% by weight.

4. Adhesive sheet according to at least one of the preceding claims, **characterized in that** the weight ratio of nitrile rubber S1 to nitrile rubber S2 is between 40 to 60 and 60 to 40.

5. Adhesive sheet according to at least one of the preceding claims, **characterized in that** said at least one reactive resin is present in a fraction of between 30% and 75% by weight relative to the blend.

6. Adhesive sheet according to at least one of the preceding claims, **characterized in that** tackifying resins are added to the blend.

7. Use of an adhesive sheet according to one of the preceding claims for bonding metal parts in electronics articles.

## Revendications

1. Film d'adhésif, comportant au moins une matière adhésive activable à la chaleur à base d'un mélange d'au moins un caoutchouc nitrile S1 et d'au moins un caoutchouc nitrile S2, ledit au moins un caoutchouc nitrile S1 ayant une teneur en nitrile n'excédant pas 25 % en poids et ledit au moins un caoutchouc nitrile S2 ayant une teneur en acrylonitrile d'au moins 30 % en poids, ainsi que
d' au moins une résine époxy, une résine Novolaque, une résine mélamine, une résine terpène-phénolique, une résine phénolique ou un polyisocyanate (« résine réactive ») ou d'une association de deux ou plus de deux des résines réactives nommées,
**caractérisé en ce que** le rapport pondéral du caoutchouc nitrile S1 au caoutchouc nitrile S2 est compris entre 20 : 80 et 80 : 20 et le mélange se trouve séparé en microphases, **caractérisées par** au moins deux températures de transition vitreuses distinctes dans la DSC.

2. Film d'adhésif selon la revendication 1, **caractérisé en ce que**
la teneur en acrylonitrile dudit au moins un caoutchouc nitrile S1 est comprise entre 15 et 25 % en poids.

3. Film d'adhésif selon au moins l'une quelconque des revendications précédentes, **caractérisé en ce que** la teneur en acrylonitrile dudit au moins un caoutchouc nitrile S2 est comprise entre 30 et 60 % en poids.

4. Film d'adhésif selon au moins l'une quelconque des revendications précédentes, **caractérisé en ce que** le rapport pondéral du caoutchouc nitrile S1 au caoutchouc nitrile S2 est compris entre 40 : 60 et 60 : 40.

5. Film d'adhésif selon au moins l'une quelconque des revendications précédentes, **caractérisé en ce que** ladite au moins une résine réactive est présente en une proportion comprise entre 30 et 75 % en poids, par rapport au mélange.

6. Film d'adhésif selon au moins l'une quelconque des revendications précédentes, **caractérisé en ce que** des résines augmentant le pouvoir adhésif sont ajoutées au mélange.

7. Utilisation d'un film d'adhésif selon au moins l'une quelconque des revendications précédentes, pour le collage de pièces métalliques dans des articles électroniques.
